# EUROPEAN PATENT SPECIFICATION

(11) **EP 3 277 697 B1**
(45) Date of publication and mention of the grant of the patent: **04.09.2019**
(21) Application number: 16717828.4
(22) Date of filing: 01.04.2016
(51) Int. Cl.: C07F 5/02

(54) **A PROCESS OF PREPARING IXAZOMIB CITRATE**
VERFAHREN ZUR HERSTELLUNG VON IXAZOMIB-CITRAT
PROCÉDÉ DE PRÉPARATION DE CITRATE D'IXAZOMIB

(30) Priority: 03.04.2015 CZ 20150233
(43) Date of publication of application: 07.02.2018
(73) Proprietor: ZENTIVA, K.S., 10 237 Praha 10 (CZ)
(72) Inventor: VLASAKOVA, Ruzena, 282 01 Cesky Brod (CZ); CERNA, Igor, 169 00 Praha 6 (CZ); REITMAJER, Josef, 142 00 Praha 4-Kamyk (CZ)
(74) Representative: Jirotkova, Ivana
(86) International application number: PCT/CZ2016/000034
(87) International publication number: WO 2016/155684

(56) References cited:
- WO-A1-2009/154737

## Description

### Technical Field

The invention relates to a process of preparing Ixazomib citrate of formula I:

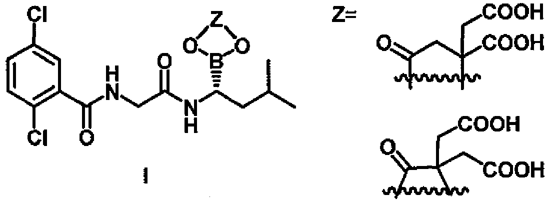

The new preparation method will considerably reduce the production costs and make the whole process simpler.

In addition, a new form of Ixazomib citrate, referred to as Form 3, has been prepared by this method.

### Background Art

Ixazomib is a novel member of the group of proteasome inhibitors with a structure belonging to the group of peptide boronic acids. A well-known and already commercially available member of this group is bortezomib of formula II.

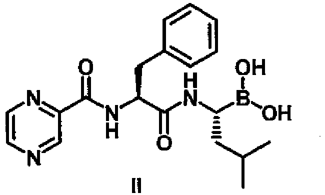

Bortezomib is used for the treatment of multiple myelomas.

Ixazomib citrate is envisaged for the treatment of the same disease but, thanks to stabilization of the boronic acid in the form of a mixed ester-anhydride with citric acid, it will be possible to administer the substance also in the oral form.

Boronic acids are sometimes difficult to prepare in the pure form. In conditions that are favourable for dehydration, the boronic acids form cyclic anhydrides and are often sensitive to light. Therefore, boronic acids are advantageously stabilized with a complexing agent, e.g. an α- or β-hydroxy acid (WO2009/154737), or by preparation of precursors with azanediylbis alcohols (WO 2012/177835, WO 2011/087822A1), which enhances their stability and makes it possible to prepare a dosage form, suitable for oral administration as well.

Ixazomib citrate I, whose efficient preparation is the object of this invention, also belongs to such stabilized compounds.

Ixazomib citrate was first described in the patent application WO 2009/154737 in two forms.

The production process according to WO 2009/154737 can be summarized in the following Scheme 1

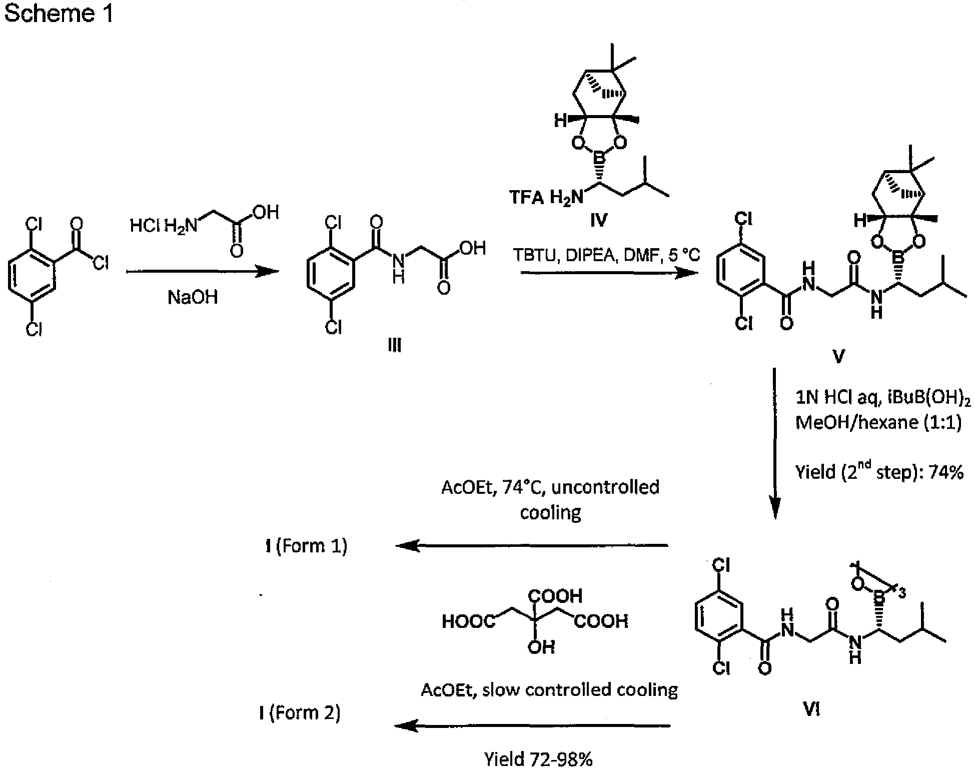

The first step is the preparation of an amide bond by a reaction of 1,4-dichlorobenzoic acid and glycine hydrochloride in a basic environment. The second step consists in formation of a peptide bond between the carboxylic group of the prepared *N*-protected glycine of formula **III** and a chiral pinanediol derivative of boroleucine in the form of a salt with trifluoroacetic acid of formula **IV**-TFA in the presence of the agent TBTU {*O-*(Benzotriazol-1-yl)-*N,N,N',N'*-tetramethyluronium tetrafluoroborate}. The next step is hydrolysis of the boroester of formula **V** in an acidic environment in the presence of a relatively high excess (2.6 equiv.) of isobutyl boronic acid, serving as a transesterification agent for the leaving group. The isolation of the product requires acido-basic processing of the reaction mixture, which is very time-consuming and also procedurally and economically demanding. The boroxine of formula **IV** prepared this way, or its free boronic acid, is reacted with citric acid in the next step. Depending on the course of cooling of the reaction mixture the product is a citrate in two isomeric forms, referred to as Form 1, or Form 2. These forms are described in the patent WO 2009/154737, including a method of their preparation, with different XRPD, DSC and TGA records, but the same NMR record (DMSO-d₆, 110°C). According to the experiments mentioned in the examples of the patent WO 2009/154737 the best total yield of the three last steps of this synthesis (from the acid of formula **III** to Ixazomib citrate of formula **I**) is 73%. The document is silent concerning purity of the product.

### Disclosure of Invention

This invention provides a new process of producing Ixazomib citrate of formula **I,** characterized in that the boroester of formula **VII** is hydrolyzed with boric acid (Scheme 2). The usual amount of boric acid varies between 1 to 3-fold the amount of the compound of formula **VII** (molar ratio). In a preferred embodiment this acid is used in a slight excess, i.e. 1.05 to 1.3-fold, optimally 1.1-fold the molar amount of the compound of formula **VII.**

The boroester **VII** is illustrated in Scheme 2, wherein R1 to R4 can independently be hydrogen, a C1 to C5 alkyl, R2 and R3 can form together a hydrocarbon cycle with the number of carbon atoms C5 to C7, or bi- or tri-cyclic substituents with the total number of carbon atoms C6 to C10.

In a preferred embodiment the hydrolysis of the boroesters of formula **VII** and subsequent esterification with citric acid are performed in a single step (Scheme 2).

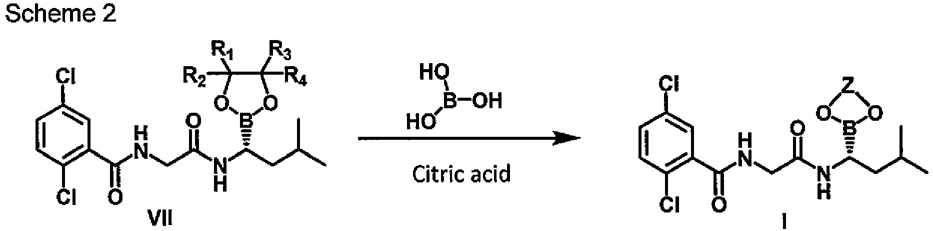

In a preferred embodiment, the derivative **V** or the pinacol ester of formula **VIII** 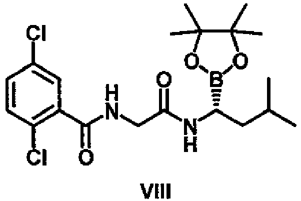 is used as the boroester of formula **VII** in the reaction. The pinacol ester of formula VIII was prepared by formation of a peptide bond between the carboxylic group of the *N*-protected glycine of formula **III** and the chiral pinacol derivative of boroleucine of formula **IX** (Scheme 3).

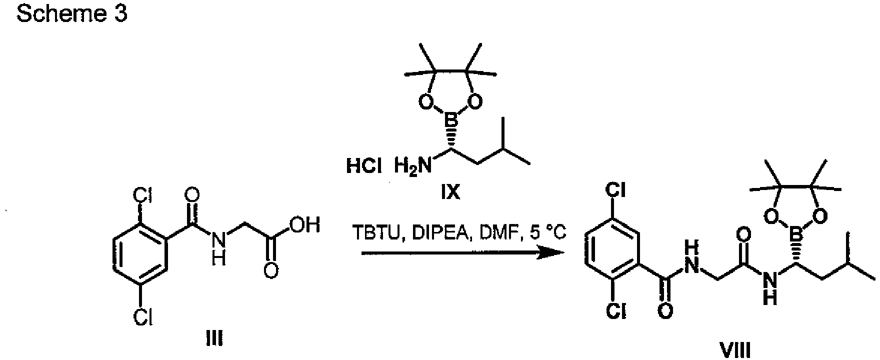

The pinacol ester of boroleucine of formula **IX** was prepared according to a procedure described in the literature (J. Org. Chem. 2014, 79, 3671-3677).

### Detailed description of the invention

This invention provides a novel efficient process of producing Ixazomib citrate of formula I, which consists in direct conversion of the boroester of formula **VII** to the desired Ixazomib citrate of formula **I.**

An advantage of this process is reduction of the synthesis by 1 step and replacement of the expensive isobutyl boronic acid with the significantly cheaper boric acid. Further, the necessity of acido-basic processing is avoided, which brings time and material savings. This process also achieved a better total yield (from the acid of formula **III** to Ixazomib citrate of formula **I**) of 80% and a product with HPLC purity of > 98% was prepared.

The boroester of formula **VII** is directly transformed to the citrate. Boric acid, instead of the commonly used organoboronic acid, is used as the acceptor of the leaving group. The agent is used in an excess of 1 to 3 equivalents, preferably 1.05 to 1.3 and more preferably 1.1 equivalents. Here, the acidic environment necessary for the hydrolysis is directly provided by citric acid, which is at the same time the reaction (stabilizing) partner for Ixazomib. Analogously, other α- or β-hydroxy acids can be used for the preparation of the respective esters (e.g. glycolic acid, malic acid, mandelic acid, lactic acid, salicylic acid). The presence of a mineral acid (e.g. commonly used hydrochloric acid) is not necessary. The reaction is carried out in common solvents, selected e.g. from the group of C1-C7 alcohols or ketones, acetonitrile etc. The reaction runs at a temperature in the range of 0 to 100°C, preferably in the range of 20 to 70°C. At room temperature, the reaction runs for 5 to 40 hours, at a temperature of 40 to 90°C the reaction runs for 20 minutes to 2 hours. The product of formula **I** is isolated from the reaction mixture by direct crystallization or a suitable co-solvent (e.g. ethyl acetate) is added before the crystallization.

In a preferred embodiment the reaction is carried out in acetone at 60°C, with the use of 1.1 equivalents of boric acid and 1.1 equivalents of citric acid. The product is isolated by addition of ethyl acetate as a co-solvent, in a yield higher than 85% and HPLC purity higher than 98%.

Such an arrangement is convenient for the production because it brings shortening of the synthesis, saving of the production time and costs.

The above mentioned process produces a form of Ixazomib citrate of formula **I,** referred to as Form 3, which exhibits the following characteristic reflections in an X-ray powder pattern, measured using the CuKα radiation: 5.4; 10.9; 12.4; 18.7 and 22.6 ± 0.2° 2-theta.

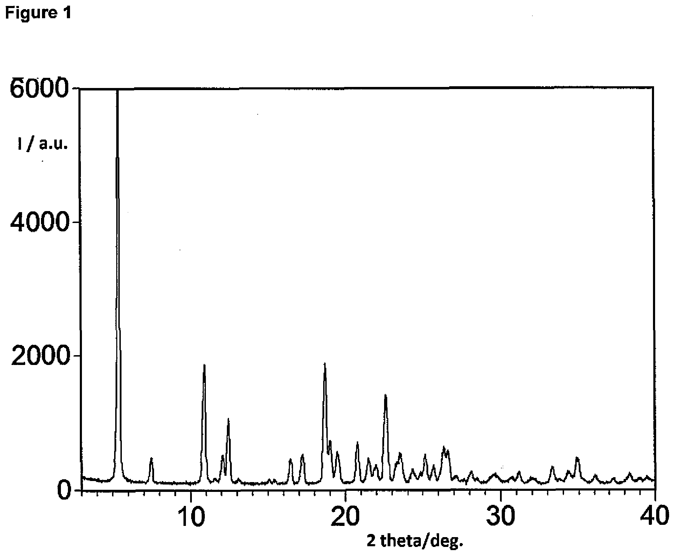

These characteristic and the other measured reflections are presented in Table 1. The X-ray pattern is included in the Appendix as Figure 1.

**Table 1**

| Table of typical peaks: | | |
|---|---|---|
| Pos. [°2Th.] | d (Å) = 0.1 [nm] | Rel. Int. [%] |
| 5.44 | 16.226 | 100.0 |
| 7.47 | 11.824 | 6.1 |
| 10.91 | 8.106 | 29.6 |
| 12.06 | 7.334 | 6.7 |
| 12.44 | 7.112 | 15.5 |
| 16.42 | 5.393 | 6.4 |
| 17.19 | 5.153 | 8.3 |
| 18.68 | 4.746 | 29.2 |
| 19.02 | 4.663 | 10.2 |
| 19.46 | 4.557 | 7.5 |
| 20.77 | 4.274 | 10.4 |
| 21.47 | 4.135 | 5.8 |
| 21.98 | 4.041 | 4.1 |
| 22.60 | 3.931 | 22.2 |
| 23.54 | 3.776 | 7.3 |
| 24.31 | 3.659 | 3.1 |
| 25.14 | 3.540 | 6.3 |
| 25.64 | 3.471 | 4.0 |
| 26.34 | 3.380 | 8.5 |
| 26.63 | 3.345 | 6.6 |
| 28.06 | 3.178 | 2.9 |
| 29.56 | 3.019 | 2.2 |
| 31.13 | 2.871 | 2.7 |
| 33.27 | 2.691 | 4.2 |
| 34.31 | 2.611 | 2.7 |
| 34.89 | 2.570 | 6.9 |

If the crystallization starts at a temperature of 20 to 25°C, crystalline Form 2, exhibiting the following characteristic reflections in an X-ray powder pattern, measured with the use of CuKα radiation, is produced: 5.8; 7.5; 11.4; 16.6; 18.1; 19.4 and 22.3 ± 0.2° 2-theta.

### Brief Description of Drawings

Figure 1: X-ray powder pattern of lxazomib citrate of formula **I,** Form 3
Figure 2: DSC record of Ixazomib citrate of formula **I,** Form 3
Figure 3: TGA record of Ixazomib citrate of formula **I,** Form 3

### Examples

### Conditions of HPLC measurement

Sample preparation: 10.0 mg of the sample is dissolved in 10.0 ml of 20mM citric acid/acetonitrile 20/80 vol./vol.

Column:
- size: I = 0.10 m, Ø = 2.1 mm, 1.7 µm particles
- stationary phase: BEH C18 Waters
- temperature: 30°C

Mobile phase:
- A: MQ water (pH adjustment with the use of phosphoric acid to 2.00 ± 0.05); B: acetonitrile R
- elution gradient:

| **time (min)** | **flow rate (ml/min)** | **% A** | **% B** |
|---|---|---|---|
| 0 | 0.5 | 80 | 20 |
| 5 | 0.5 | 60 | 40 |
| 7 | 0.5 | 20 | 80 |
| 8 | 0.5 | 80 | 20 |
| 10 | 0.5 | 80 | 20 |

Detection: spectrophotometer at 230 nm
injected quantity: 3 µl
Sample temperature: 20°C
**1H NMR** was measured with the use of the Bruker Avance 500, probe Prodigy 5 mm, or Bruker Avance 250, probe QNP 250 MHz SB 5mm devices.

### X-ray powder diffraction

The diffraction pattern was obtained using an X'PERT PRO MPD PANalytical powder diffractometer, used radiation CuKa (λ = 0.1542 nm (1.542 Å)), excitation voltage: 45 kV, anode current: 40 mA, measured range: 2 - 40° 2θ, increment: 0.01° 2θ at the reflection dwell time of 50 s. For the correction of the primary array, 0.02 rad Soller slits, a 10mm mask and a 1/4° fixed anti-dispersion slit were used. The irradiated area of the sample is 10 mm, programmable divergence slits were used. For the correction of the secondary array, 0.02 rad Soller slits and a 5.0 anti-dispersion slit were used. The measurement was carried out with a flat sample applied onto a Si plate.

**The records of the differential scanning calorimetry (DSC)** were measured using a DSC Pyris 1 device from Perkin Elmer. The sample charge in a standard Al pot was between 3 and 4 mg and the heating rate was 10°C/min. The temperature program that was used consists of 1 min of stabilization at the temperature of 20°C and then of heating up to 250°C at the heating rate of 10°C/min. As the carrier gas, 4.0 N₂ was used at the flow rate of 20 ml/min.

**The records of the thermogravimetric analysis (TGA)** were measured using a TGA 6 device from Perkin Elmer. The sample charge in a corundum pot was between 15 and 17 mg and the heating rate was 10°C/min. The temperature program that was used consists of 1 minute's stabilization at the temperature of 20°C and then of heating up to 300°C at the heating rate of 10°C/min. As the carrier gas, 4.0 N₂ was used at the flow rate of 20 ml/min.

### Preparation of the boroester of formula V

### Example 1

10.0 g (40 mmol) of (2,5-dichlorobenzoyl)glycine **(III),** 15.3 g (1.1 equivalents) of the pinanediol derivative of boroleucine of formula **IV,** 13.7 g (1.1 equivalents) of TBTU and 66 ml of dimethylformamide are weighed into a flask. The resulting suspension is cooled in an ice bath and 21.2 ml (3 equivalents) of diisopropyl ethyl amine is added dropwise under cooling with the ice bath during 2 h. The reaction mixture is stirred for another 2 h in the ice bath, then it is diluted with 130 ml of ethyl acetate and washed with water, a 10% solution of K₂CO₃, a 1% solution of H₃PO₄ and brine. Evaporation of the solvent in a rotary vacuum evaporator provides 17.5 g (88%) of 2,5-dichloro-*N-*[2-({(1*R*)-3-methyl-1 -[(3a*S*,4*S*,6*S*,7a*R*)-3a,5,5-trimethylhexahydro-4,6-methano-1 ,3,2-benzodioxaborol-2-yl]butyl}amino)-2-oxoethyl]benzamide of formula **V.**

### Preparation of the boroester of formula VIII

### Example 2

0.5 g (2 mmol) of (2,5-dichlorobenzoyl)glycine of formula **III,** 0.55 g (1.1 equivalents) of the pinacol derivative of boroleucine of formula **IX,** 0.65 g (1 equivalent) of TBTU and 6 ml of dimethylformamide are weighed into a flask. The resulting suspension is cooled in an ice bath and 1.05 ml (3 equivalents) of diisopropyl ethyl amine is added dropwise under cooling with the ice bath during 2 h. The reaction mixture is stirred for another 2 h in the ice bath, then it is diluted with 10 ml of ethyl acetate and washed with water, a 10% solution of K₂CO₃, a 1% solution of H₃PO₄ and brine. Evaporation of the solvent in a rotary vacuum evaporator provides 0.69 g (78%) of (R)-2,5-dichloro-N-(2-((3-methyl-1-(4,4,5,5-tetramethyl-1,3,2-dioxaborolan-2-yl)butyl)amino)-2-oxoethyl)benzamide of formula **VIII.**

### Preparation of Ixazomib citrate of formula I

### Example 3

3.00 g (6.06 mmol) of 2,5-dichloro-*N*-[2-({(1*R*)-3-methyl-1-[(3a*S*,4*S*,6*S*,7a*R*)-3a,5,5-trimethylhexahydro-4,6-methano-1,3,2-benzodioxaborol-2-yl]butyl}amino)-2-oxoethyl]benzamide of formula **V,** 0.41 g (6.67 mmol) of boric acid and 1.28 g (6.67 mmol) of citric acid are weighed into a flask. The mixture is stirred in 15 ml of acetone at the room temperature for 22 h. 50 ml of ethyl acetate is added to the mixture. After removal of a part of the solvent (15 ml) by distillation and spontaneous cooling of the reaction mixture, Ixazomib citrate of formula I is obtained by aspiration. After drying in a vacuum drier (16 h at 40°C) the yield of the reaction is 91% and HPLC purity of the product is 98.9%.
**¹H NMR (DMSO, 500.13 MHz, 25 °C):** 12.15 (br.s., 2H), 10.71 (br.s., 1H), 9.13 (t, 1H, *J* = 5.7 Hz), 7.66 (s, 1H), 7.57 (d, 2H, *J* = 1.4 Hz), 4.27 (br, 2H), 2.92 - 2.87 (m, 1H), 2.77 - 2.73 (m, 1H), 2.66 - 2.59 (m, 1H), 2.53 (br, 2H), 1.69 (br, 1H), 1.38 - 1.18 (m, 2H), 0.88 (d, 6H, *J* = 6.4 Hz),
**¹H NMR (DMSO, 250.13 MHz, 80 °C):** 10.29 (br.s., 1H), 8.82 (t, 1H, *J* = 5.7 Hz), 7.62 (t, 1H, *J* = 1.5 Hz), 7.53 (d, 2H, *J* = 1.5 Hz), 4.27 (d, 2H, *J* = 5.6 Hz), 2.76-2.62 (m, 5H), 1.79 - 1.63 (m, 1H), 1.44 - 1.20 (m, 2H), 0.897 (d, 3H, *J* = 6.5 Hz), 0.892 (d, 3H, *J* = 6.4 Hz).

The **XRPD** pattern is shown in Fig. 1, the characteristics peaks are presented in Table 1. We refer to this novel form of Ixazomib citrate as Form 3.

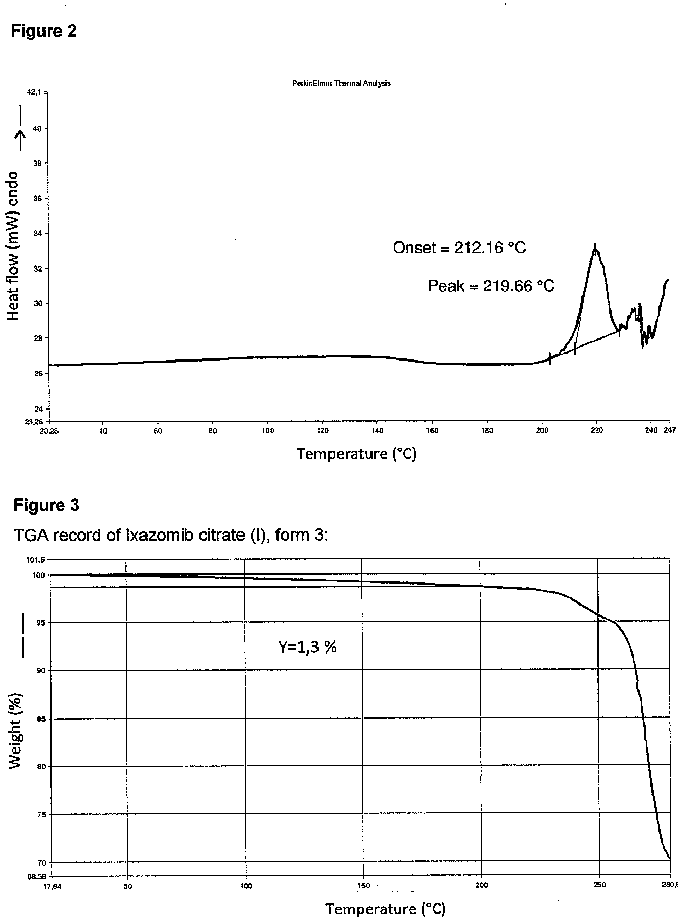

The **DSC** record contains an endotherm that corresponds to the melting point Tₒₙₛₑₜ = 212.2°C. The record is shown in Fig. 2 in the Appendix.

The **TGA** record indicates a weight loss in the temperature range of 20 to 200°C of about 1.3%.

The record is shown in Fig. 3 in the Appendix.

### Example 4

1.00 g (2.02 mmol) of 2,5-dichloro-*N*-[2-({(1*R*)-3-methyl-1-[(3a*S*,4*S*,6*S*,7a*R*)-3a,5,5-trimethylhexahydro-4,6-methano-1,3,2-benzodioxaborol-2-yl]butyl}amino)-2-oxoethyl]benzamide of formula **V,** 0.125 g (2.02 mmol) of boric acid and 0.388 g (2.02 mmol) of citric acid are weighed into a flask. The mixture is stirred in 5 ml of acetone in a bath at the temperature of 60°C for 1.5 h. 15 ml of hot ethyl acetate is added to the reaction mixture, a part of the solvent (5 ml) is removed by distillation and after spontaneous cooling of the reaction mixture, Ixazomib citrate of formula **I** is obtained by aspiration. After drying in a vacuum drier (16 h at 40°C) the yield of the reaction is 87% and HPLC purity of the product is 98.8%.

The **1H NMR** and **XRPD** records are the same as the records in Example 3.

### Example 5

1.00 g (2.02 mmol) of 2,5-dichloro-*N*-[2-({(1*R*)-3-methyl-1-[(3a*S*,4*S*,6*S*,7a*R*)-3a,5,5-trimethylhexahydro-4,6-methano-1,3,2-benzodioxaborol-2-yl]butyl}amino)-2-oxoethyl]benzamide **(V),** 0.137 g (2.22 mmol) of boric acid and 0.427 g (2.22 mmol) of citric acid are weighed into a flask. The mixture is stirred in 5 ml of acetone at the room temperature for 16 h. 17 ml of ethyl acetate is added to the reaction mixture and after stirring at the room temperature for 3 hours, the product is aspirated and washed with 2 ml of ethyl acetate. After drying in a vacuum drier (16 h at 40°C) the yield of the reaction is 82% and HPLC purity of the product is 98.9%.

The **1H NMR** and **XRPD** records correspond to Form 2 as published in the patent WO 2009/15437.

### Example 6

224 mg (0.5 mmol) of (*R*)-2,5-dichloro-N-(2-((3-methyl-1-(4,4,5,5-tetramethyl-1,3,2-dioxaborolan-2-yl)butyl)amino)-2-oxoethyl)benzamide of formula **VIII,** 34 mg (1.1 equivalents) of boric acid and 107 mg (1.1 equivalents) of citric acid are weighed into a flask. The mixture is stirred in 1.5 ml of acetone at the room temperature for 20 h. 4.5 ml of ethyl acetate is added to the mixture. After stirring at the room temperature for 3 hours, Ixazomib citrate of formula **I** is obtained by aspiration. After drying in a vacuum drier (16 h at 40°C) the yield of the reaction is 72% and HPLC purity of the product is 99.5%.

The **1 H NMR** and **XRPD** records correspond to Form 2 as published in the patent WO 2009/15437.

### Preparation of Ixazomib salicylate

### Example 7

Using an analogous procedure to Examples 2 to 4, esters of other hydroxy acids, e.g. salicylic acid, can be obtained.
**1H NMR (DMSO-d6**, **500 MHz):** 10.93 (s, 1H), 9.16 (t, 1H, J = 5.8 Hz), 7.76 (dd, 1H, J = 7.8, 1.7 Hz), 7.58 (broad, 1H), 7.55 - 7.51 (m, 2H), 7.48 (1H, td, J = 7.8, 1.6 Hz), 6.95 (t, 1H, J = 7.5 Hz), 6.91 (d, 1H, J = 8.2 Hz), 4.31 - 4.23 (m, 2H), 2.88 - 2.79 (m, 1H), 1.67 (septet, 1H, J = 6.8 Hz), 1.47 - 1.36 (m, 2H), 0.91 (d, 3H, J = 6.87 Hz), 0.89 (d, 3H, J = 6.7 Hz).

## Claims

1. A process of preparing Ixazomib citrate of formula **I:** 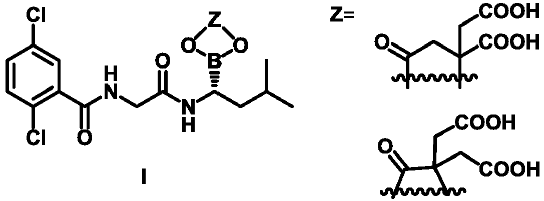 **characterized by** reaction of the boroester of formula **VII**: 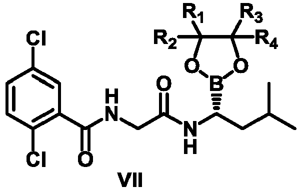 wherein
R1 to R4 can be independently hydrogen, a C1 to C5 alkyl,
R2 and R3 can form together a hydrocarbon cycle (C5 to C7), or possibly bi- or tricyclic substituents with the total number of carbon atoms C6 to C10,
with boric acid and citric acid, producing Ixazomib citrate of formula **I.**

2. The process according to claim 1, **characterized in that** the amount of boric acid varies in the range of 1 to 3-fold the amount of the compound of formula **VII.**

3. The process according to claim 2, **characterized in that** the amount of boric acid varies in the range of 1.05 to 1.3-fold the amount of the compound of formula **VII**.

4. The process according to claim 3, **characterized in that** the amount of boric acid is 1.1 -fold the amount of the compound of formula **VII.**

5. The process according to claims 1 to 4, **characterized in that** the boroester of formula **V** is used:

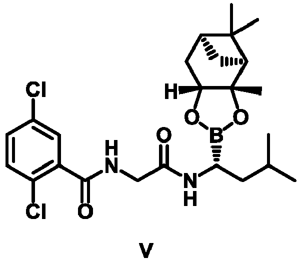

6. The process according to claims 1 to 4, **characterized in that** the boroester of formula **VIII** is used:

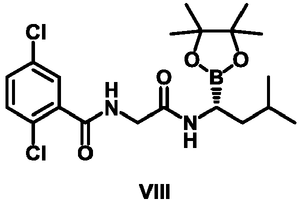

7. The process according to any one of the preceding claims 1 to 6, **characterized in that** the *in situ* produced boronic acid, or its trimer, of formula **VI:** 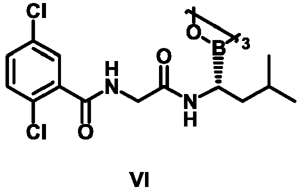 is not isolated and is reacted in a single step with citric acid, producing Ixazomib citrate of formula **I.**

8. The process according to claim 7, **characterized in that** the reaction is performed in a solvent selected from the group of C3 to C7 ketones, C3 to C7 alcohols, and acetonitrile at the room temperature for 5 to 40 hours.

9. The process according to claim 7, **characterized in that** the reaction is performed in a solvent selected from the group of C3 to C7 ketones, C3 to C7 alcohols, and acetonitrile at the temperature of 40 to 90°C for 20 minutes to 2 hours.

10. The process according to claim 7, **characterized in that** Ixazomib citrate of formula **I** is isolated from the reaction mixture by direct crystallization or by crystallization after addition of a co-solvent.

11. The process according to claim 10, **characterized in that** the co-solvent is ethyl acetate.

12. The process according to claims 10 or 11, **characterized in that** the crystallization is started at a temperature of 60 to 80°C, producing the crystalline Form 3, exhibiting the following characteristic reflections in an X-ray powder pattern, measured with the use of CuKa radiation: 5.4; 10.9; 12.4; 18.7 and 22.6 ± 0.2° 2-theta.

13. The process according to claims 10 or 11, **characterized in that** the crystallization is started at a temperature of 20 to 25°C, producing the crystalline Form 2, exhibiting the following characteristic reflections in an X-ray powder pattern, measured with the use of CuKa radiation: 5.8; 7.5; 11.4; 16.6; 18.1; 19.4 and 22.3 ± 0.2° 2-theta.

## Patentansprüche

1. Ein Verfahren zur Herstellung von Ixazomibcitrat der Formel **I:** 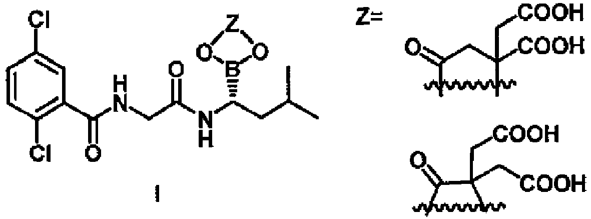 **gekennzeichnet durch** Umsetzung des Boresters der Formel VII: 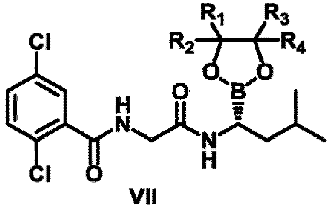 worin
R1 bis R4 unabhängig voneinander Wasserstoff, ein C1 - bis C5-Alkyl sein können,
R2 und R3 zusammen einen Kohlenwasserstoffring (C5 bis C7) oder möglicherweise bi- oder tricyclische Substituenten mit einer Gesamtzahl an Kohlenstoffatomen von C6 bis C10 bilden können,
mit Borsäure und Zitronensäure, wobei Ixazomibcitrat der Formel **I** erhalten wird.

2. Verfahren nach Anspruch 1, **dadurch gekennzeichnet, dass** die Menge an Borsäure im Bereich des 1- bis 3-fachen der Menge der Verbindung der Formel **VII** variiert.

3. Verfahren nach Anspruch 2, **dadurch gekennzeichnet, dass** die Menge an Borsäure im Bereich des 1,05- bis 1,3-fachen der Menge der Verbindung der Formel **VII** variiert.

4. Verfahren nach Anspruch 3, **dadurch gekennzeichnet, dass** die Menge an Borsäure das 1,1-fache der Menge der Verbindung der Formel **VII** beträgt.

5. Verfahren nach Ansprüchen 1 bis 4, **dadurch gekennzeichnet, dass** der Borester der Formel **V** verwendet wird:

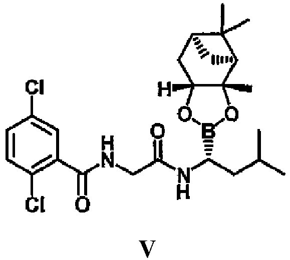

6. Verfahren nach Ansprüchen 1 bis 4, **dadurch gekennzeichnet, dass** der Borester der Formel **VIII** verwendet wird:

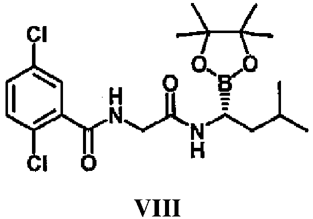

7. Verfahren nach einem der vorhergehenden Ansprüche 1 bis 6, **dadurch gekennzeichnet, dass** die in situ hergestellte Boronsäure, oder ihr Trimer, der Formel **VI:** 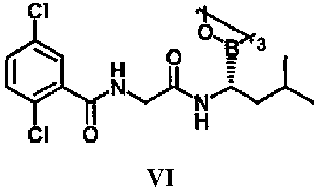 nicht isoliert wird und in einem einzigen Schritt mit Zitronensäure umgesetzt wird, wobei Ixazomibcitrat der Formel **I** entsteht.

8. Verfahren nach Anspruch 7, **dadurch gekennzeichnet, dass** die Umsetzung in einem Lösungsmittel, ausgewählt aus der Gruppe der C3- bis C7-Ketone, C3- bis C7-Alkohole und Acetonitril, 5 bis 40 Stunden bei Raumtemperatur durchgeführt wird.

9. Verfahren nach Anspruch 7, **dadurch gekennzeichnet, dass** die Umsetzung in einem Lösungsmittel, ausgewählt aus der Gruppe der C3- bis C7-Ketone, C3- bis C7-Alkohole und Acetonitril, bei einer Temperatur von 40 bis 90 °C 20 Minuten bis 2 Stunden lang durchgeführt wird.

10. Verfahren nach Anspruch 7, **dadurch gekennzeichnet, dass** Ixazomib-Citrat der Formel **I** durch direkte Kristallisation oder durch Kristallisation nach Zusatz eines Cosolvens aus dem Reaktionsgemisch isoliert wird.

11. Verfahren nach Anspruch 10, **dadurch gekennzeichnet, dass** das Cosolvens Ethylacetat ist.

12. Verfahren nach Anspruch 10 oder 11, **dadurch gekennzeichnet, dass** die Kristallisation bei einer Temperatur von 60 bis 80 °C gestartet wird, wobei die kristalline Form 3 entsteht, welche folgende charakteristische Reflexionen in einem Röntgen-Pulverdiffraktogramm zeigt, gemessen unter Verwendung von CuKα-Strahlung: 5,4; 10,9; 12,4; 18,7 und 22,6 ± 0,2° 2-Theta.

13. Verfahren nach Anspruch 10 oder 11, **dadurch gekennzeichnet, dass** die Kristallisation bei einer Temperatur von 20 bis 25 °C gestartet wird, wobei die kristalline Form 2 entsteht, welche die folgenden charakteristischen Reflexionen in einem Röntgen-Pulverdiffraktogramm zeigt, gemessen unter Verwendung von CuKα-Strahlung: 5,8; 7,5; 11,4; 16,6; 18,1; 19,4 und 22,3 ± 0,2° 2-Theta.

## Revendications

1. Un procédé de préparation de citrate d'ixazomib de formule 1: 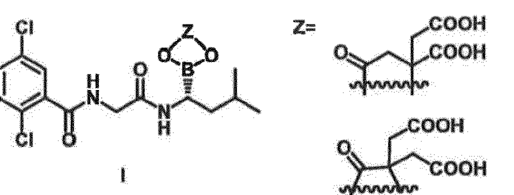 **caractérisé par** la réaction du boroester de formule VII: 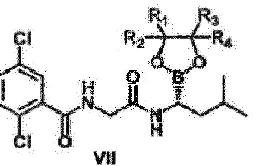 dans laquelle:
- R1 à R4 peuvent représenter, indépendamment l'un de l'autre, un atome d'hydrogène, un groupe alkyle en C1 à C5,
- R2 et R3 peuvent former ensemble un cycle d'hydrocarbure (C5 à C7), ou éventuellement des substituants bi ou tricycliques dont le nombre total d'atomes de carbone est de C6 à C10,
avec de l'acide borique et de l'acide citrique, produisant du citrate d'ixazomib de formule 1.

2. Le procédé selon la revendication 1, **caractérisé en ce que** la quantité d'acide borique varie dans l'intervalle de 1 à 3 fois la quantité du composé de formule VII.

3. Le procédé selon la revendication 2, **caractérisé en ce que** la quantité d'acide borique varie dans l'intervalle de 1,05 à 1,3 fois la quantité du composé de formule VII.

4. Le procédé selon la revendication 3, **caractérisé en ce que** la quantité d'acide borique est de 1,1 fois la quantité du composé de formule VII.

5. Le procédé selon les revendications 1 à 4, **caractérisé en ce que** l'on utilise le boroester de formule V:

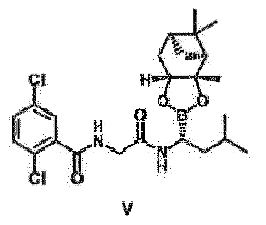

6. Le procédé selon les revendications 1 à 4, **caractérisé en ce que** l'on utilise le boroester de formule VIII:

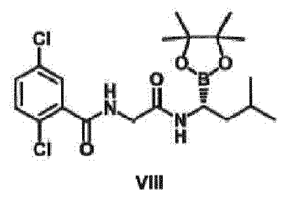

7. Le procédé selon l'une quelconque des revendications précédentes 1 à 6, **caractérisé en ce que** l'acide boronique produit *in situ* ou son trimère de formule VI: 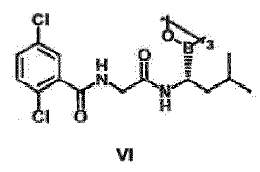 n'est pas isolé et est mis à réagir en une seule étape avec de l'acide citrique, ce qui donne le citrate d'ixazomib de formule 1.

8. Le procédé selon la revendication 7, **caractérisé en ce que** la réaction est effectuée dans un solvant choisi dans le groupe des cétones en C3 à C7, des alcools en C3 à C7 et de l'acétonitrile à la température ambiante pendant 5 à 40 heures.

9. Le procédé selon la revendication 7, **caractérisé en ce que** la réaction est effectuée dans un solvant choisi dans le groupe des cétones en C3 à C7, des alcools en C3 à C7 et de l'acétonitrile à une température de 40 à 90°C pendant 20 minutes à 2 heures.

10. Le procédé selon la revendication 7, **caractérisé en ce que** le citrate d'ixazomib de formule 1 est isolé du mélange réactionnel par cristallisation directe ou par cristallisation après addition d'un co-solvant.

11. Le procédé selon la revendication 10, **caractérisé en ce que** le co-solvant est l'acétate d'éthyle.

12. Le procédé selon les revendications 10 ou 11, **caractérisé en ce que** la cristallisation est démarrée à une température de 60 à 80°C, produisant la forme cristalline 3, présentant les réflexions caractéristiques suivantes dans le diffractogramme de poudre aux rayons X, mesuré avec l'utilisation de la raie CuKα: 5.4; 10.9; 12.4; 18.7 et 22.6 ± 0,2 ° 2-thêta.

13. Le procédé selon les revendications 10 ou 11, **caractérisé en ce que** la cristallisation est commencée à une température de 20 à 25°C, produisant la forme cristalline 2, présentant les réflexions caractéristiques suivantes dans le diffractogramme de poudre aux rayons X, mesuré avec l'utilisation de la raie CuKα: 5.8; 7.5; 11.4; 16.6; 18.1; 19.4 et 22.3 ± 0.2 ° 2-thêta.
